# EUROPEAN PATENT SPECIFICATION

(11) **EP 1 944 945 B1**
(45) Date of publication and mention of the grant of the patent: **28.03.2012**
(21) Application number: 07000515.2
(22) Date of filing: 11.01.2007
(51) Int. Cl.: H04L 29/12, H04L 29/06

(54) **Communication system with transparent subscriber mobility based on group registration**
Kommunikationssystem mit transparenter Teilnehmermobilität auf der Basis von Gruppenregistrierungen
Système de communication avec une mobilité d'abonné transparente basée sur l'enregistrement de groupe

(43) Date of publication of application: 16.07.2008
(73) Proprietor: Nokia Siemens Networks GmbH & Co. KG, 81541 München (DE)
(72) Inventor: Castro, German, 9220 Aalborg East (DK); Larsen, Kim Lynggaard, 9000 Aalborg (DK); Schwefel, Hans-Peter, Dr., 9000 Aalborg (DK); Di Carlo, Vincenzo Scotto, 81739 München (DE)

(56) References cited:
- US-A1- 2006 294 245
- SCHULZRINNE H ET AL: "Application-layer mobility using SIP" SERVICE PORTABILITY AND VIRTUAL CUSTOMER ENVIRONMENTS, 2000 IEEE SAN FRANCISCO, CA, USA 1 DEC. 2000, PISCATAWAY, NJ, USA,IEEE, US, 2001, pages 29-36, XP010551460 ISBN: 0-7803-7133-X
- SIP WG H SCHULZRINNE COLUMBIA U: "SIP Registration" IETF STANDARD-WORKING-DRAFT, INTERNET ENGINEERING TASK FORCE, IETF, CH, 1 January 1900 (1900-01-01), XP015035068 ISSN: 0000-0004

## Description

### FIELD OF THE INVENTION

The present invention relates to a method, a gateway and a communication system for an internet protocol based corporate domain and internet protocol based public domain.

### BACKGROUND OF THE INVENTION

US2005294245A1 describes method and system for a communication session join function to facilitate the provisioning of enhanced communication services. Internet Engineering Task force (IETF) document draft-schulzrinne-sip-register-00 describes registration procedures for personal, pre-call terminal and service mobility. Document "Application Layer Mobility using SIP" by Schulzrinne & all describes providing terminal, personal, session and service mobility for multimedia applications.

There is presently only a single recommendation for connecting a corporate domain to an Internet protocol multimedia subsystem (IMS) based mobile network as for example a 3GPP (3rd Generation Partnership Project (produces WCDMA standard)) network. The approach providing the possibility to register a user of an Internet protocol based private branch exchange (IP PBX) of a corporate network to an IMS - being is typically not 3GPP compliant - by a single registration procedure is described in a SIPForum (SIP = Session Initiation Protocol) recommendation (Recommendation Draft "IP PBX / Service Provider Interoperability"). This recommendation specifies the strategies for providing connectivity to the corporate users in the public domain and the way to receive calls from the IMS. However, the existing standards fail to provide mobility of users (i.e. for example user terminals). The users or clients of the domains are supposed to be always connected to the same corporate domain (e.g. the same PBX) without the possibility to roam to a public domain IMS. Further, there are users having two subscriptions. However, a single subscription for receiving business calls in both, the PBX and the IMS is not provided. There are some solutions providing a single number service for home and business calls, but they do not include the features for SIP.

### SUMMARY

It is an object of the present invention to provide methods, apparatuses and systems for an enhanced connectivity and mobility of a user within a communication system including an internet protocol based corporate domain and a internet protocol based public domain.

According to an aspect of the present invention, a method is provided for connecting a user to an internet protocol based communication system including a corporate domain and public domain, the method comprising the steps of assigning a unique user address to a user of the corporate domain as a public address, assigning a unique corporate domain address to the corporate domain, registering the corporate domain address in a gateway by using a unique corporate address for the corporate domain serving as notification to the public domain that the corporate domain is available, and routing a call to the unique user address to the gateway.

According to this aspect of the invention, a group registration is provided, such that a unique corporate address is registered at the public domain (e.g. an IMS). Only, a single initial registration of the corporate domain (e.g. a PBX) is necessary in order provide access and mobility to all users registered in the corporate domain from and in the public domain. A user may roam from the corporate domain to the public domain and vice versa by providing his location via a registration. This approach minimizes the changes in the corporate domain if user dynamically attach and detach to the domain. Slight modifications in the registration procedure in the public domain are necessary where a gateway or similar device is present to provide the new functionality.

According to an aspect of the invention, the unique corporate user address and the unique corporate address are composed according to a predetermined principle, such that both addresses refer to the corporate domain. Generally, the composition of the specific addresses of the user in the different domains should take account of the following aspects. As an example, a user UE in the corporate domain may be reached by the unique user address ue.corporate@ims.com, which may be considered as a public address. The user UE being registered inside the corporate domain may be reachable by using the public address, but also by the address in a form ue@corporate.com. However, as the corporate domain is registered in the gateway at the IMS by using a unique corporate address as for example corporate@ims.com, the IMS (public domain) holds information that the whole corporate domain and thereby all the users in the corporate domain are available. Accordingly, all users in the corporate domain are available from the public domain.

According to an aspect of the invention a call to the unique user address may be routed by default to the gateway. If for example a specific format like xyz.corporate@ims.com as a public address in the IMS is used for all users of the corporate domain, all calls having this format may automatically be routed to the gateway. xyz is to be considered as wildcard for users, like user ue1, ue2 etc. such that the address reads ue1.corporate@ims.com. However, if policies at the IMS force a different specific procedure, the automatic call routing may be abandoned.

According to another aspect of the invention a gateway for connecting a corporate domain and a public domain within an internet protocol based communication system is provided. The gateway includes a database being adapted to store information about the location of a current user in a corporate domain or an external public domain, translation means to perform address translation between the internal corporate address and the unique user address, wherein the gateway is further adapted to register the corporate domain with respect to the public domain. The public domain may be an external IMS. The corporate domain includes for example a PBX, where the corporate users are available via their internal corporate address. As the corporate domain is registered at the gateway by group registration, all users of the PBX may roam to the IMS and vice versa, always being available by their public address. The gateway according to this aspect of the present invention provides extended availability for users of the corporate domain.

According to another aspect of the invention, a communication system using an internet protocol is provided including a corporate domain and a public domain, and means for registering corporate domain users within the public domain. The means are adapted to the aspects set out above with respect to gateway according to the invention and the method for connecting users to the domains.

According to an aspect of the invention, the communication system may further be adapted to support group classes of session initiation protocol uniform resource locators (SIP URL) based on a template mechanism. This aspect of the invention relates to the SIP connection protocols. Accordingly, a template mechanism is to be installed in the communication system where the user identification and information can be stored and retrieved.

According to another aspect of the invention, the communication system may be adapted to use policies such as public domain (IMS) call management, corporate domain (PBX) and gateway notification of the connection of the user to the public domain (IMS), a registration of the location and registration state of the user in the gateway. The communication may further be adapted to pass the information relating to the session control to the corporate domain, i.e. to the PBX.

According to the above aspects of the invention, the dynamic update of users in the PBX domain is sufficient and the IMS does not need to be informed about registration or new users in the IMS. The signalling between the instances of the network is reduced, as the SIP messages are conveyed directly to the current location of the user. The above methods and configurations allow that an IMS is always present for all users. Further, all the features from the PBX may be still available in the IMS. This subset of features may comprise push services to the location where the user is registered. In particular, there are only minor modifications of the PBX and it is possible to use only a single number service.

### BRIEF DESCRIPTION OF THE DRAWINGS

These and other aspects of the invention will be apparent from and elucidated with reference to the embodiments described hereinafter, which relate to just one possible example . In the following drawings
- Fig. 1: shows a simplified diagram of the main components of a communication system according to an aspect of the present invention,
- Fig. 2: shows a simplified diagram of the message flow relating to group registration according to an aspect of the present invention,
- Fig. 3: shows a simplified diagram illustrating the user registration in the corporate domain according to an aspect of the present invention,
- Fig. 4: shows a simplified diagram of an internal call without notification to the gateway according to an aspect of the present invention,
- Fig. 5: shows a simplified diagram illustrating the corporate user registration in a public domain according to an aspect of the present invention,
- Fig. 6: shows a simplified diagram illustrating the internal call in the corporate domain according to an aspect of the present invention,
- Fig. 7: shows a simplified diagram of a session establishment from the public to the corporate domain according to an aspect of the present invention,
- Fig. 8: shows a session establishment in the public domain according to an aspect of the present invention, and
- Fig. 9: shows a simplified diagram illustrating an outgoing call from the corporate domain to the public domain according to an aspect of the present invention.

### DESCRIPTION OF EMBODIMENTS

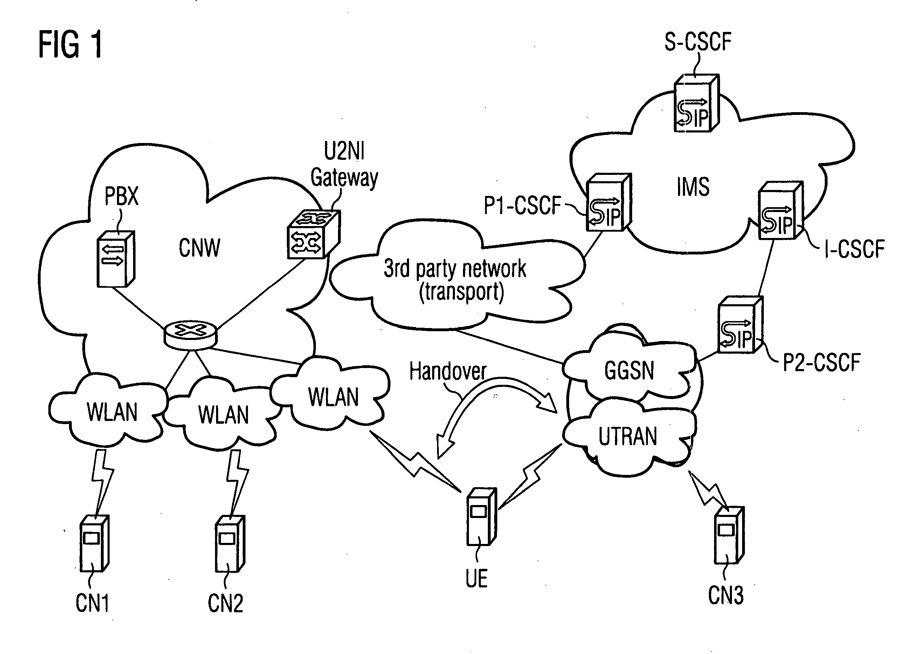

Fig. 1 shows a simplified diagram of the main components of a communication system according to an aspect of the present invention. Fig. 1 shows a possible implementation including WLAN (wireless local area network) access in PBX, and UMTS access in IMS. The diagram illustrates a possible logical and functional split, but the actual implementation may have different physical partitions. The communication system comprises a corporate network CNW and an internet protocol based multimedia subsystem IMS, as well as a third party network. The corporate network CNW includes a private branch exchange network PBX and a user-to-network interface U2NI. The corporate network CNW is coupled via a wireless local area network WLAN to communication nodes CN1 and CN2. The IMS is coupled via several call session control function units P1-CSCF, P2-CSCF to the third party network and a UMTS network including a gateway GPRS support node GGSN and an universal terrestrial radio access network UTRAN. The communication network CN3 is coupled to the UTRAN. The user-to-network interface U2NI is also referred to as "gateway" hereinafter. The gateway is located between the IMS and the corporate domain. The functionalities of the gateway differ from those provided by the conventional solutions. The following description illustrates in detail how the different aspects of the present invention are achieved, and how connectivity and mobility between the IP PBX based network and the IMS based 3GPP mobile network is installed. According to an important aspect of the present invention, the gateway and additional means in the IMS allow a hand-over between the IMS and the corporate network CNW of the user UE.

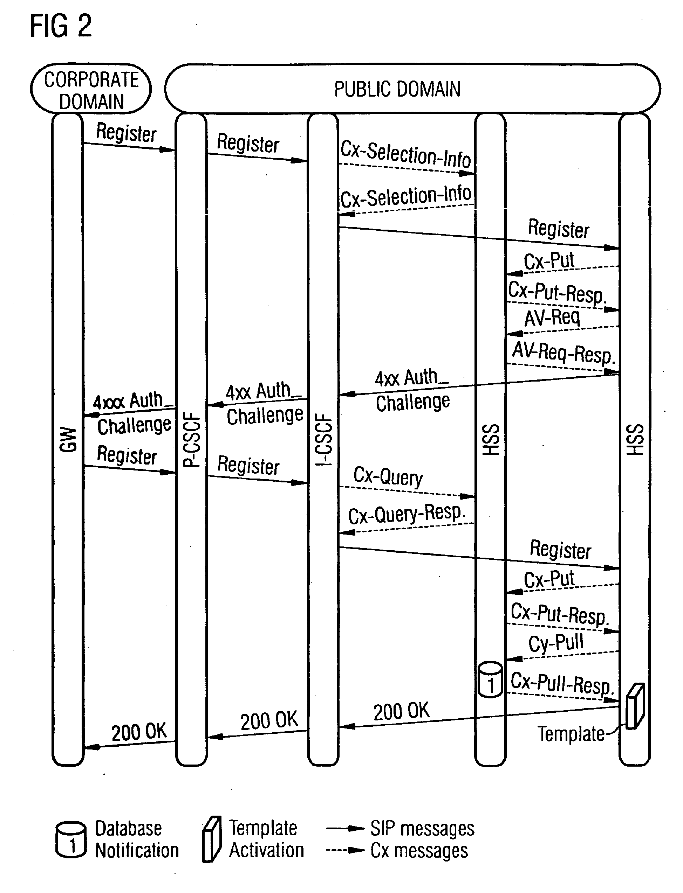

Fig. 2 shows a simplified diagram of the message flow inside an IMS (public domain) according to an aspect of the present invention. Accordingly, the gateway GW of the corporate domain performs a special registration (group registration) of the corporate domain or multiple corporate domains (PBXs) to the IMS, when it is booted and the interface to the PBX is up. The registration triggers a special treatment in the IMS. This includes the invitation to a SIP URL (as for example ue1.corporate@ims.com as the public address) being forwarded to the corporate domain. ue1 identifies the user in the corporate domain. The general form of the address may be xyz.corporate@ims.com. The wildcard xyz may have the same structure as the public service identity (PSI). It is stored in the HSS. During the registration, it is mandatory that a security association (SA) is made between the gateway and the P-CSCF (Proxy Call Session Control Function) in the IMS, like for example via standard IMS AKA. The registration is comparable to a parent registration for the users in the corporate domain. Fig. 2 gives an overview of the message flow inside the IMS. In addition to the standard registration of the user inside the IMS and due to the extension of the IMS functionalities, the HSS stores information relevant to the corporate group. Further, the S-CSCF (Serving Call Session Control Function) is notified that for future requests, it must use the template to determine whether a user belongs to the corporate group or not, and if it does, react according to the policies. In more detail, the gateway GW sends a registration request to the P-CSCF, which passes the registration to I-CSCF (Interrogation Call Session Control Function), from where a CX-selection info message is passed to HSS. HSS replies by a CX-selection info message, and the registration is passed from I-CSCF to HSS, that is, from the database notification to the template HSS. The database notification and the template activation exchange Cx-Put, Cx-Put-Resp., AV-Req, and AV-Req-Resp. messages, and a message 4xx Auth_Challenge is passed from the HSS template to the I-CSCF, and from there to the proxy P-CSCF, and finally to the gateway of the corporate domain. In the next step, a registration is issued by the gateway GW passing to P-CSCF, and further to I-CSCF, where a Cx-Query message is sent and a Cx-Query response is received. Further, the registration is carried from the I-CSCF to the HSS (template), where again Cx-Put, Cx-Put-Resp., and Cx-Pull as well as Cx-Pull-Resp. signals are exchanged. The acknowledged signals 200 OK are finally transmitted from HSS to I-CSCF and via P-CSCF to the gateway.

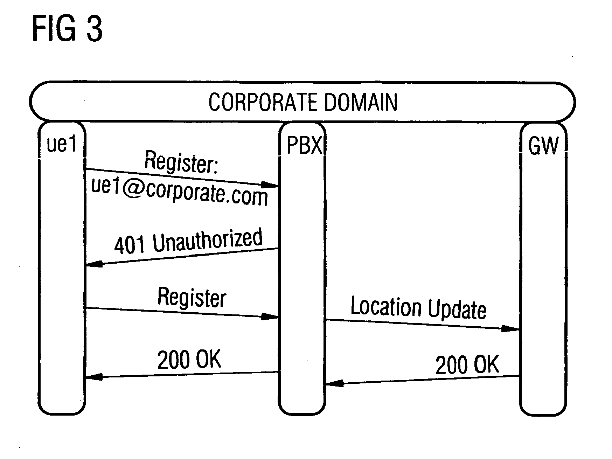

Fig. 3 shows a simplified diagram illustrating the user registration in the corporate domain according to an aspect of the present invention. If a user ue1 registers in a corporate domain with respect to the PBX, a standard PBX registration is carried out such that the IMS is usually not informed about the registration. As the IMS sends by default an invite message including for example ue1.corporate@ims.com to the corporate domain, if the user is not registered at the IMS domain, such a registration is not necessary. The user ue1 registers as ue1 at corporate.com at the PBX and receives a message 401 unauthorized in response. A successful registration results in a location update indicated in Fig. 3 and an acknowledge signal 200 OK from the gateway GW to the PBX, and from there to the user ue1.

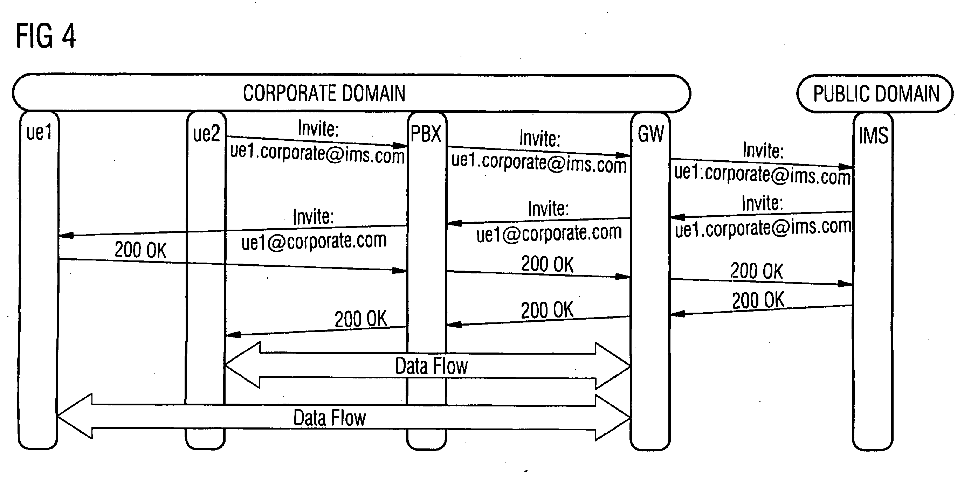

Fig. 4 shows a simplified diagram of an internal call without notification to the gateway according to an aspect of the present invention. However, the gateway GW is to be informed about registration in the corporate domain, since otherwise, even internal calls would be routed through the IMS domain as illustrated in Fig. 4. The SIP URL used by the user ue1 in order to receive a connection from the PBX is the corporate one (ue1@corporate.com). Inside the corporate domain, the gateway GW and the user ue1 are the only two entities that need to be aware of the relation between xyz@corporate.com and xyz.corporate@ims.com. An invite message invite:ue1.corporate@ims.com is sent from the user ue2 to PBX, and from PBX to the gateway GW. Further, the invitation arrives at the IMS. From the IMS, the message invite:ue1.corporate@ims.com is sent to the gateway, from there to the PBX, and from there to the user ue1. Respective acknowledge signals 200 OK are sent from user ue1 to IMS, and back to user ue2. The data flow is indicated by arrows from ue2 to IMS, and from IMS to ue1.

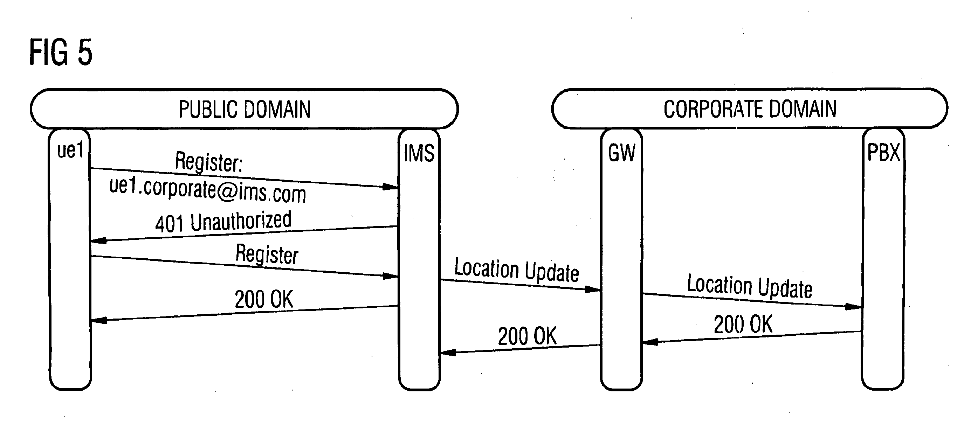

Fig. 5 shows a simplified diagram illustrating the corporate user registration in a public domain according to an aspect of the present invention. If a corporate user ue1 registers to the IMS, the default routing to the corporate domain is "overwritten", and incoming calls are forwarded to the current location (binding update). The gateway GW has to be informed about the registration, so calls from the corporate domain are forwarded to the user ue1 in the public domain as illustrated in Fig. 5. The binding operation is only valid as long as the user ue1 is registered to the IMS, when the user ue1 de-registers, INVITE messages addressed to the SIP URL of the corporate user are routed again to the corporate domain.

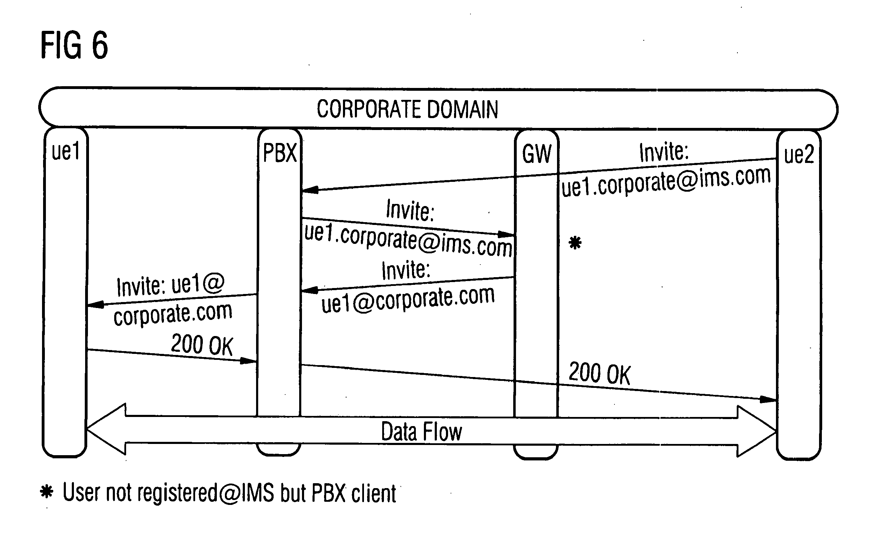

Fig. 6 shows a simplified diagram illustrating the internal call in the corporate domain according to an aspect of the present invention. The situation shown in Fig. 6 relates to incoming calls from the corporate domain when the user ue1 is registered in the corporate domain. If a destination address for a requested user ue1 is unknown in the PBX (ue1.corporate@ims.com) the request has to be forwarded to the gateway GW that translates the destination address to the internal corporate address (ue1@corporate.com) and forwards again the request to the user ue1. In response to the call of user ue2, the data flow between user ue2 and user ue1 is established as indicated by the arrow.

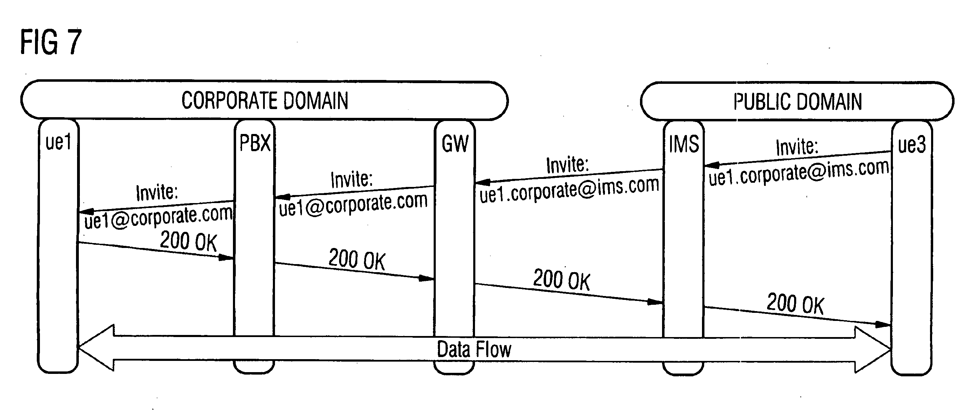

Fig. 7 shows a simplified diagram of a session establishment from the public to the corporate domain according to an aspect of the present invention. This situation relates to incoming calls from the public domain (IMS) (from user ue3) when a user ue1 is registered in the corporate domain. Accordingly, user ue3 sends invite:ue1.corporate@ims.com to IMS, from where the message invite:ue1.corporate@ims.com is transmitted to the gateway GW, the PBX, and the user ue1. The acknowledgement signal 200 OK passes from ue1 via PBX, GW, and IMS to ue3. Data flow is established between ue1 in the corporate domain and ue3 in the public domain. Accordingly, the gateway maps incoming requests to a user ue1 being registered at a PBX. So, if, for example, a user ue3 at the public domain intends to call the user ue1 at the corporate network, he sends a SIP invite ue1.corporate@ims.com. As the user ue1 is not registered at the public domain (IMS), the IMS recognizes by use of the template that addresses with the format xyz.corporate@ims.com correspond to corporate users and forwards the INVITE message to the gateway GW at the interface to the corporate domain. The gateway GW performs the mapping (translation) to an internal address, e.g. ue1@pbx.com (or more generally ue1@corporate.com) and forwards the invitation to the PBX.

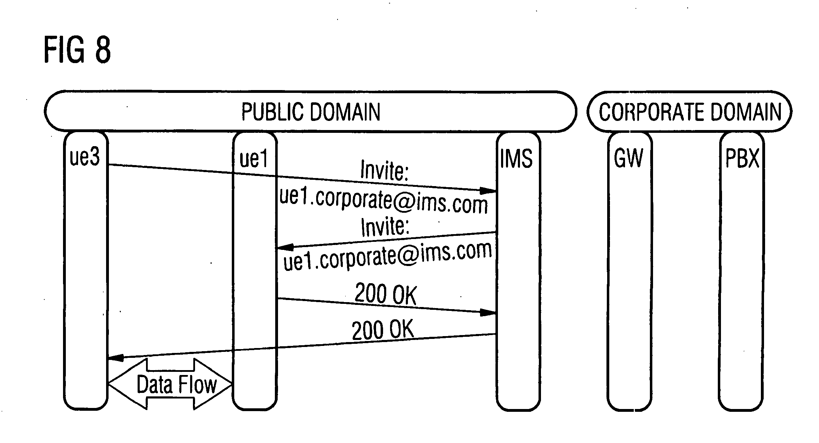

Fig. 8 shows a session establishment from a public to the corporate domain according to an aspect of the present invention. This diagram relates to a situation where incoming calls arrive from the public domain (IMS), when a user is registered in the IMS. If an invite message (ue1.corporate@ims.com) from the user ue3 reaches the IMS, the S-CSCF uses the template in order to determine that the request is directed to a corporate domain temporarily connected to the IMS. A policy is used according the user registration status. For example, if the session is to be managed exclusively by the IMS, this would be a standard invite flow sind the IMS uses the current binding of the user. However, as mentioned above, the gateway GW was informed about the registration of the user in the public domain when the user registered.

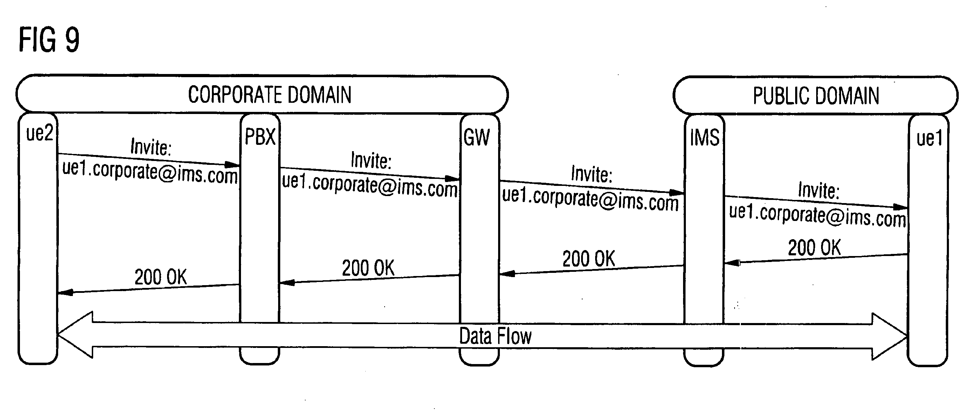

Fig. 9 shows a simplified diagram illustrating an outgoing call from the corporate domain according to an aspect of the present invention. In this situation the user ue1 is located in the public domain (IMS). Any corporate user as for example ue2, may send an INVITE to ue1.corporate@ims.com. At the PBX the message will be forwarded to the gateway GW, which will perform the required modifications and then forward the message again to the IMS. The IMS will then proceed according to the policy that is currently active for the corporate user to whom the session is addressed.

As set out here above, the functionalities of the present invention include mapping of addressed from public SIP URLs to private or internal SIP URLs (also in the SDP), locations information of the user (e.g. registration of the user) and ISIM for registration. Further, the IMS provides group registration for the corporate domain users, policies for individual registration in order to identify corporate users connected to the IMS, template mechanisms in order to identify corporate users connected to the IMS and a functionality that the same S-CSCF or the HSS has to be contacted, if a request is directed to a corporate user.

## Claims

1. A method of connecting a user to an internet protocol based communication system including a corporate domain and public domain, the method comprising the steps of
- assigning a unique user address to a user of the corporate domain as a public address, wherein the unique user address comprises a reference to the corporate domain,
- assigning a unique corporate domain address to the corporate domain,
- registering the corporate domain address in a gateway by using a unique address for the corporate domain, wherein the registration is serving as notification to the public domain that the corporate domain is available, and that a call to a user whose unique user address comprises a reference to the corporate domain, is to be routed to the gateway.

2. A method of claim 1, further comprising registering the user to the public domain with the unique user address of the user, and responsive to said registration of the user, overwriting the default routing to the corporate domain for the user and forwarding incoming calls to the user to current location of the user.

3. A method of claim 1 or 2, wherein the gateway is adapted to register the corporate domain with respect to the public domain.

4. A communication system, comprising means for implementing any of method of claims 1 - 3.

## Patentansprüche

1. Verfahren zum Verbinden eines Benutzers mit einem auf dem Internet-Protokoll basierenden Kommunikationssystem, das eine Firmendomäne und eine öffentliche Domäne umfasst, wobei das Verfahren die folgenden Schritte umfasst:
- Vergeben einer einzigartigen Benutzeradresse an einen Benutzer der Firmendomäne als eine öffentliche Adresse, wobei die einzigartige Benutzeradresse einen Verweis auf die Firmendomäne umfasst,
- Vergeben einer einzigartigen Firmendomänenadresse an die Firmendomäne,
- Registrieren der Firmendomänenadresse in einem Gateway durch Verwendung einer einzigartigen Adresse für die Firmendomäne, wobei die Registration als Benachrichtigung für die öffentliche Domäne dient, dass die Firmendomäne verfügbar ist und dass ein Ruf eines Benutzers, dessen einzigartige Benutzeradresse einen Verweis auf die Firmendomäne umfasst, zu dem Gateway zu routen ist.

2. Verfahren nach Anspruch 1, ferner umfassend Registrieren des Benutzers in der öffentlichen Domäne mit der einzigartigen Benutzeradresse des Benutzers und als Reaktion auf die Registration des Benutzers Überschreiben des Vorgaberoutings zu der Firmendomäne für den Benutzer und Weiterleiten von ankommenden Rufen des Benutzers zu dem aktuellen Ort des Benutzers.

3. Verfahren nach Anspruch 1 oder 2, wobei das Gateway dafür ausgelegt ist, die Firmendomäne mit Bezug auf die öffentliche Domäne zu registrieren.

4. Kommunikationssystem, das Mittel zum Implementieren von beliebigen Verfahren nach Anspruch 1-3 umfasst.

## Revendications

1. Procédé de connexion d'un utilisateur à un système de communication basé sur le protocole Internet comprenant un domaine d'entreprise et un domaine public, le procédé comprenant les opérations suivantes :
- l'attribution d'une adresse d'utilisateur unique à un utilisateur du domaine d'entreprise en tant qu'adresse publique, dans laquelle l'adresse d'utilisateur unique contient une référence au domaine d'entreprise,
- l'attribution d'une adresse de domaine d'entreprise unique au domaine d'entreprise,
- l'enregistrement de l'adresse de domaine d'entreprise dans une passerelle au moyen d'une adresse unique pour le domaine d'entreprise, dans lequel l'enregistrement sert de notification au domaine public que le domaine d'entreprise est disponible, et qu'un appel à un utilisateur dont l'adresse d'utilisateur unique contient une référence au domaine d'entreprise doit être acheminé à la passerelle.

2. Procédé selon la revendication 1, comprenant en outre l'enregistrement de l'utilisateur dans le domaine public avec l'adresse d'utilisateur unique de l'utilisateur et, en réponse audit enregistrement de l'utilisateur, l'écrasement du routage par défaut vers le domaine d'entreprise pour l'utilisateur et la transmission d'appels entrants pour l'utilisateur vers l'emplacement actuel de l'utilisateur.

3. Procédé selon la revendication 1 ou 2, dans lequel la passerelle est adaptée de façon à enregistrer le domaine d'entreprise par rapport au domaine public.

4. Système de communication comprenant un moyen de mettre en oeuvre tout procédé selon les revendications 1 à 3.
